Europäisches Patentamt

European Patent Office

Office européen des brevets

(19)

(11) Veröffentlichungsnummer : **0 190 435**
**B1**

(12) **EUROPÄISCHE PATENTSCHRIFT**

(45) Veröffentlichungstag der Patentschrift :
05.04.89

(51) Int. Cl.⁴ : **B 01 D 53/18, F 28 F 25/08**

(21) Anmeldenummer : 85115601.8

(22) Anmeldetag : 07.12.85

(54) Packungskörper aus dünnem, folienartigen Material für Stoff- und Wärmeaustauschkolonnen zwischen flüssigen und gasförmigen Phasen.

(30) Priorität : 30.01.85 CH 406/85

(43) Veröffentlichungstag der Anmeldung :
13.08.86 Patentblatt 86/33

(45) Bekanntmachung des Hinweises auf die Patenterteilung : 05.04.89 Patentblatt 89/14

(84) Benannte Vertragsstaaten :
DE FR GB IT NL SE

(56) Entgegenhaltungen :
FR–A– 2 406 151
GB–A– 1 106 566
GB–A– 2 035 831

(73) Patentinhaber : GEBRÜDER SULZER AKTIENGESELL-
SCHAFT
Zürcherstrasse 9
CH-8401 Winterthur (CH)

(72) Erfinder : Plüss, Raymond
Einfangstrasse 182
CH-8450 Klein-Andelfingen (CH)

(74) Vertreter : Dipl.-Ing. H. Marsch Dipl.-Ing. K. Sparing
Dipl.-Phys.Dr. W.H. Röhl Patentanwälte
Rethelstrasse 123
D-4000 Düsseldorf 1 (DE)

**Beschreibung**

Die Erfindung betrifft Packungskörper aus dünnem, folienartigen Material für Kolonnen zum Stoff- und Wärmeaustausch zwischen flüssigen und gasförmigen Phasen, wobei die Materialoberflächen durch Prägen strukturiert sind und die Höhe der Erhebungen bzw. Vertiefungen der Struktur größer als die Materialdicke ist, sowie ein Verfahren zur Herstellung einer Struktur auf Folien für Packungskörper.

Hierbei bezieht sich die Erfindung vorwiegend auf Packungskörper mit einem geordneten Aufbau, wie sie z. B. aus der CH-A 398 503 bekannt sind.

Aus der CH-A 412 806 ist es bekannt, Packungskörper für Stoffaustauschkolonnen herzustellen, wobei die Lagen, welche die Trägerflächen für die herabrieselnde Flüssigkeit bilden, aus einem Metallgewebe mit speziellen Abmessungen bestehen. Eine gleichmäßige Benetzung des Gewebes durch die Flüssigkeit wird hiernach durch die Einhaltung spezifischer Eigenschaften des Gewebes angestrebt. Abgesehen davon, daß derartige Metallgewebe teuer und korrosionsanfällig sind, weisen sie bei ihrer Verwendung für Packungskörper noch weitere, wesentliche Nachteile auf. Die seitliche Flüssigkeitsausbreitung auf dem Gewebe beruht im wesentlichen auf Kapillarkräften, darum kann nur relativ wenig Flüssigkeit transportiert werden. Außerdem kann Kapillarität nur in einer Richtung, d. h. entweder zwischen den Kett- oder den Schußfäden auftreten. Es findet daher auch keine Quervermischung der Flüssigkeit statt. Weiterhin kann kein optimaler Stoffaustausch aufgrund des großen hold up (Flüssigkeitsinhalt) der gleichbedeutend mit einem relativ dicken Flüssigkeitsfilm ist, erreicht werden.

Gemäß der DE-A 3 222 892 sollen zur Verbesserung einer gleichmäßigen Flüssigkeitsverteilung die aus Blechen bestehenden Lagen von Packungskörpern der eingangs beschriebenen Art mindestens auf einer Seite eine Vielzahl von Vorsprüngen bzw. Erhebungen aufweisen, deren Höhe in der Größenordnung eines Millimeters liegt und deren Abstände voneinander etwa in der gleichen Größenordnung liegen. Hierdurch kann durch einen sogenannten pin-ball-Effekt die Quervermischung auf den Rieselflächen zwar verbessert werden. Jedoch wird die Benetzung verschlechtert, da durchgehende Kapillarrinnen fehlen, insbesondere falls die Vorsprünge nur auf einer Seite der Lagen liegen.

Im Falle, daß die Lagen beidseitig mit Vorsprüngen versehen werden, stören die hierbei entstehenden Vertiefungen, da in diesen Flüssigkeit stagniert und damit wesentliche Nachteile mit sich bringt.

Die Erfindung hat es sich zur Aufgabe gemacht, durch Aufbringung einer geeigneten Oberflächenstruktur auf aus dünnem, folienartigen Material bestehende Packungskörper eine verbesserte Benetzung und eine gleichmäßige Verteilung der Flüssigkeit ohne störende Randeffekte sowie eine gute Quervermischung zu erzielen. Weiterhin soll die Strukturierung so ausgebildet sein, daß der hold up reduziert und somit der Stoff- bzw. Wärmeaustausch in einer Kolonne wesentlich verbessert wird.

Diese Aufgabe wird gemäß der Erfindung dadurch gelöst, daß die Struktur durchgehende, sich kreuzende Rinnen aufweist und symmetrisch zur Winkelhalbierenden der sich kreuzenden Rinnen ausgebildet ist, wobei die Strukturen der Vorder- und Rückseite des folienartigen Materials identisch und als Feinstrukturen derart ausgebildet sind, daß die Flüssigkeit unter der Wirkung von Gravitations- und Kapillarkräften gleichmäßig über die Materialoberflächen verteilt wird.

Die beiden Seiten des folienartigen Materials, vorzugsweise Blech, weisen demnach ein Netz von sich kreuzenden Rinnen auf.

Unter durchgehenden Rinnen soll eine Ausbildung verstanden werden, bei welcher die Sohlen der Rinnen immer durchgehende Seitenwände aufweisen, so daß die Kapillarwirkung nirgends unterbrochen ist.

Die Erhebungen bzw. Vertiefungen der Struktur, welche die Rinnen bilden, können verschiedene Formen aufweisen. Beispielsweise können sie pyramiden-, pyramidenstumpf-, kegel-, kegelstumpf- oder kugelkalottenförmig ausgebildet sein.

Aufgrund der erfindungsgemäßen Strukturierung der Folienoberflächen wird die Flüssigkeit längs der Rinnen unter der Wirkung von Kapillar- und Gravitationskräften über die Rieselflächen gleichmäßig verteilt. An den Kreuzungsstellen der Rinnen kann Flüssigkeit von der einen in die andere Rinne überströmen, so daß eine gute Quervermischung erzielt wird.

Infolge des symmetrischen Abfließens der Flüssigkeit über erfindungsgemäße Rieselflächen treten außerdem keine unerwünschten Randeffekte auf, welche den Stoff- bzw. Wärmeaustausch zwischen der flüssigen und der gasförmigen Phase verschlechtern würden.

Wie sich in der Praxis gezeigt hat, weisen erfindungsgemäß ausgebildete Packungskörper auch für schlecht benetzende Flüssigkeiten und schlecht benetzbare Materialien, wie z. B. wässrige Lösungen auf rostfreiem Stahl, überraschend gute Stoffaustausch-Eigenschaften auf.

Wenn gleichmäßige Flüssigkeitsausbreitung erwünscht ist, ist es von besonderem Vorteil, beim Einbau erfindungsgemäßer Packungskörper darauf zu achten, daß die Winkelhalbierende der sich kreuzenden Rinnen im wesentlichen parallel zur Fallinie der in der Kolonne abwärts strömenden Flüssigkeit liegt.

Bei einer vorteilhaften Ausführungsform der Erfindung schließen die Rinnen zur Winkelhalbierenden einen Winkel von 20 bis 70° ein. Es ist weiterhin vorteilhaft, die Breite der Rinnen so zu wählen, daß sie zwischen 1 und 5 mm liegt und die Tiefe der Rinnen zwischen 0,2 bis 2 mm.

Gegenstand der Erfindung ist ferner ein Verfahren zur Herstellung einer Struktur auf Folien für Packungskörper in einem Tiefziehvorgang mit zwei Werkzeugen, bei dem die Oberflächen der Werkzeuge ein Profil von aneinandergereihten Erhebungen aufweisen, wobei die höchsten Punkte der Erhebungen des einen Werkzeugs zentrisch zwischen den höchsten Punkten der Erhebungen des anderen Werkzeugs liegen, wobei die Flächen der Strukturierung der Folien durch die Spitzen der Erhebungen der Werkzeuge gespannt werden. Hierbei können die Werkzeuge als Platten ausgebildet sein, die auf einer Presse montiert sind, wobei beim Zusammenfahren der Platten die Oberflächen der Folie strukturiert werden, wobei die Folie schrittweise zwischen den beiden Platten bei Offenstellung hindurchgeschoben wird. Die Werkzeuge können auch aus angetriebenen Walzen bestehen, wobei die Folie zwischen den Walzen hindurchgeführt wird.

Die Erfindung wird im folgenden anhand von einem in der Zeichnung dargestellten Ausführungsbeispiel erläutert.

Fig. 1 zeigt in schematischer Darstellung einen Ausschnitt eines Packungskörpers in axionometrischer Darstellung,

Fig. 2 einen Ausschnitt einer ungefalteten Lage in Aufrechtstellung in axionometrischer Darstellung und

Fig. 3 einen Schnitt durch die Lage längs der Schnittlinie A-A in Fig. 2.

Fig. 4 zeigt in schematischer Darstellungsweise einen Ausschnitt von zwei strukturierten Platten einer Presse in Offenstellung zur Herstellung einer strukturierten Folie,

Fig. 5 die beiden Platten mit der bereits hergestellten strukturierten Folie in geschlossener Stellung und

Fig. 6 einen Ausschnitt des gefertigten Erzeugnisses in horizontaler Lage.

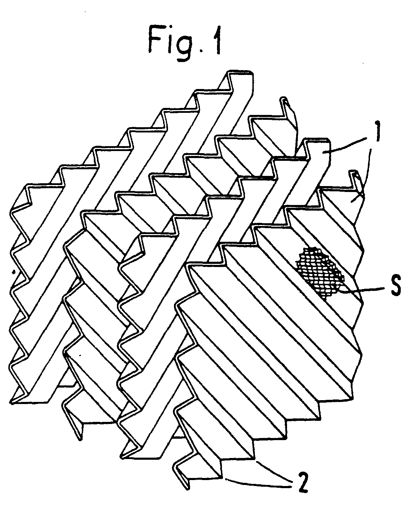

Der in Fig. 1 dargestellte Ausschnitt eines Packungskörpers weist vier Lagen 1 mit Grobfaltungen 2 auf. Zur Verdeutlichung wurden in der Zeichnung die Lagen auseinandergezogen. Ein Ausschnitt s gibt die Strukturierung der Oberflächen der Lagen an.

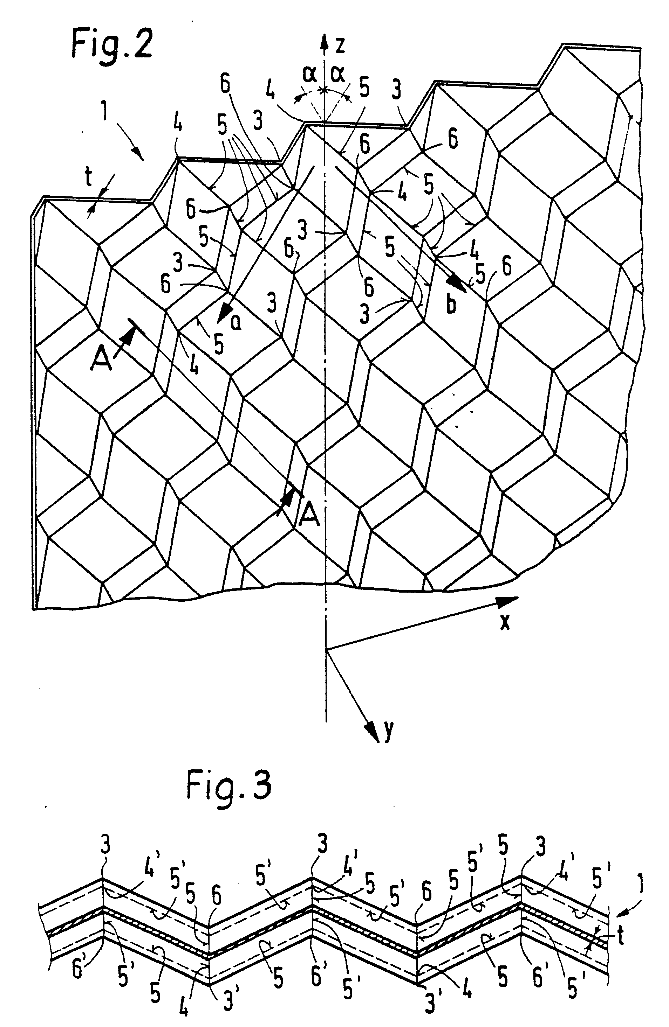

Fig. 2 zeigt einen Lagenausschnitt 1 mit einem Beispiel einer erfindungsgemässen Strukturierung im ungefalteten Zustand. Die Lage, die z. B. aus Metall, wie Kupfer, rostfreier Stahl, Monell oder auch aus Kunststoff beispielsweise bestehen kann, hat eine Materialstärke t. Die Struktur weist Erhebungen 3 und Vertiefungen 4 auf. Im Ausführungsbeispiel bestehen die Erhebungen 3 und Vertiefungen 4 aus vierseitigen Pyramiden. Die Pyramiden 3 sind derart angeordnet, dass die Basiskanten benachbarter Pyramiden nicht Seite an Seite liegen, sondern derart, dass ihre Seitenkanten gegeneinander gerichtet sind. Die Flanken der Pyramiden 3 ergeben V-förmige Rinnen, wobei die Schnittlinien dieser Flanken die Sohlen 5 der Rinnen bilden.

Vier aneinandergrenzende Flanken der Pyramiden 3 ergeben eine pyramidenförmige Vertiefung 4. Hierdurch kann erreicht werden, dass eine Vertiefung 4 auf der einen Seite der Folie einer Erhebung 3, auf der anderen Seite der Folie entspricht. Somit sind identische Strukturen auf beiden Seiten der Folie vorhanden.

Die Rinnen, deren Sohlen mit der Bezugsziffer 5 versehen sind, kreuzen sich in den Vertiefungen 4 und führen über die, von den Pyramiden 3 gebildeten Sättel 6 zu den nächsten Vertiefungen 4.

Pfeile a und b zeigen die Hauptrichtungen der Rinnen, in denen die Flüssigkeit geführt wird.

Die Hauptrichtungen a und b schliessen jeweils einen gleichgrossen Winkel $\alpha$ mit der Achse z ein.

Zu einem besseren Verständnis sind die Koordinatenachsen x, y und z, welche für die axionometrische Darstellung angewendet wurden, angedeutet, wobei die Folienfläche in der Ebene x, z und die Spitzen der Erhebungen 3 bzw. die Senken der Vertiefungen 4 in Richtung der y-Achse zeigen.

Fig. 3 zeigt eine vergrösserte Darstellung des Schnittes A-A gemäss Fig. 2, wobei die gleichen Bezugsziffern wie in Fig. 2 verwendet sind. Die Erhebungen bzw. Vertiefungen, Sohlen der Rinnen und Sättel der unteren Oberfläche bzw. der anderen Seite der Folie sind mit 3′, 4′, 5′ und 6′ bezeichnet.

Die durchgehenden Rinnen erlauben, dass Kapillarkräfte wirksam werden, wodurch eine Verbesserung der Benetzbarkeit erreicht werden kann.

Durch die Neigung der Rinnen in bezug auf die Achse z kann zusätzlich Gravitationskraft auf die Flüssigkeit einwirken, wodurch die Flüssigkeit über die reine Kapillarwirkung hinaus in den Rinnen gefördert wird. Durch diese Art der Flüssigkeitsführung wird ein Stau der Flüssigkeit vermieden und der hold up minimiert.

Rinnen mit gegenläufigen Neigungen kreuzen sich in den Vertiefungen, wodurch ein Ausgleich der Flüssigkeitsströme erzielt wird und Konzentrationsunterschiede ausgeglichen werden können. Dadurch erhält man eine ausserordentlich gleichmässige Verteilung der Flüssigkeit, sowie ausgeglichene Flüssigkeitskonzentrationen bzw. Flüssigkeitstemperaturen.

Da die Rinnen übergangslos zu bzw. von den Vertiefungen hin- bzw. wegführen, wird ein Stagnieren der Flüssigkeit in den Vertiefungen vermieden, wodurch die sonst entstehenden Nachteile, wie thermische Zersetzung, Verschmutzung und schlecht ausgenutzte Austauschoberflächen vermieden werden.

Die gleichen Vorteile können auch dann auftreten, wenn z. B. bei Extraktionsverfahren zwei flüssige Phasen miteinander in Kontakt gebracht werden.

Die Erhebungen bzw. Vertiefungen können diverse Formen aufweisen, wobei Pyramiden, insbesondere 4- oder 6-seitige, bevorzugt sind.

Strukturierte Oberflächen werden allgemein durch einen Tiefziehvorgang entweder mit einer Presse oder mit Walzen hergestellt.

Dabei ist die Form der Werkzeuge im wesentlichen ein Negativ der zu erstellenden Struktur.

Die notwendige Geometrie der Werkzeugoberflächen wird hierbei meistens durch Fräsen, Hobeln, Schleifen oder Drehen hergestellt.

Da die Rinnen jedoch nicht parallel zur Folienebene liegen, sondern aus der Ebene beidseitig herausragen, d. h. abwechselnd an- und absteigen, und da die Struktur fein ist und enge, scharfe Konturen aufweist, können die oben angeführten Herstellungsverfahren nicht angewendet werden.

Eine weitere Erkenntnis der Erfindung besteht darin, dass die gewünschte Struktur durch einen Tiefziehvorgang mit Pressen oder Walzen mit Werkzeugen, die nicht das Negativ der Struktur aufweisen müssen, hergestellt werden kann.

Ein vorteilhaftes Verfahren zur Herstellung einer erfindungsgemässen Struktur auf Folien besteht nach der Erfindung in einem Tiefziehvorgang mit zwei Werkzeugen, wobei die Oberflächen der Werkzeuge ein Profil von aneinandergereihten Erhebungen aufweisen, derart, dass die höchsten Punkte der Erhebungen des einen Werkzeuges zentrisch zwischen den höchsten Punkten der Erhebungen des anderen Werkzeuges liegen.

Wenn z. B. die Struktur aus vierseitigen Pyramiden besteht, können die Oberflächen der Werkzeuge ebenfalls aus vierseitigen Pyramiden aufgebaut sein, wobei die Seitenkanten benachbarter Pyramiden nicht mehr gegeneinander gerichtet sind, sondern die Basiskanten können Seite an Seite liegen. Aus diesem Grund können die Pyramiden durch einfaches Fräsen von V-förmigen Nuten hergestellt werden, da diese Nuten in bezug auf die Spitzen der Pyramiden eine konstante Tiefe aufweisen.

Bei dieser Herstellungsart sind die Flächen der Strukturierung der Folien nicht durch die Flächen des Werkzeuges vorgegeben, sondern die Flächen der Struktur der Folien werden durch die Spitzen der Erhebungen der Werkzeuge gespannt.

Mit Hilfe dieser einfachen Herstellungsweise können nahezu beliebig feine Strukturen mit der erforderlichen Präzision und ausreichend scharfen Konturen erzeugt werden.

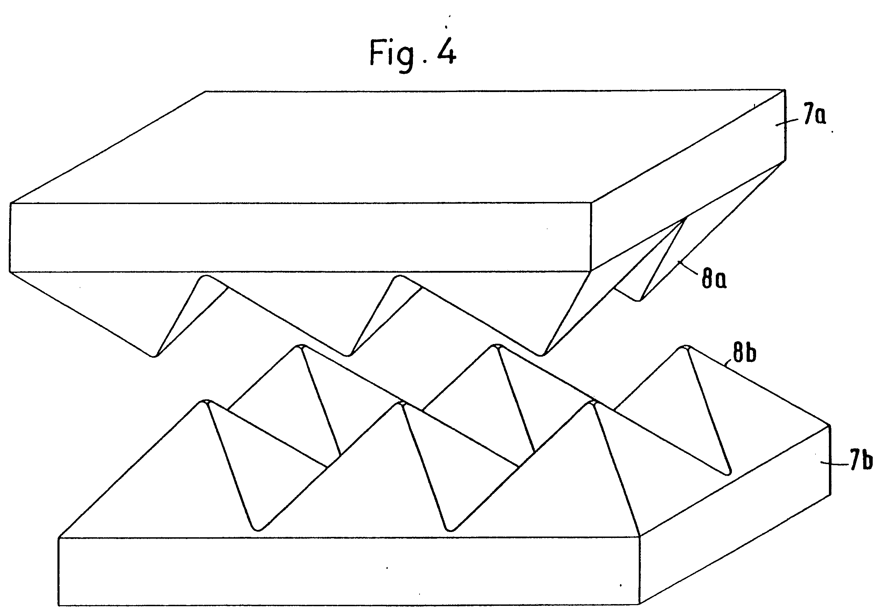

Fig. 4 zeigt zwei plattenförmige Werkzeuge 7a und 7b in geöffneter Stellung. Die Platten sind in nicht dargestellter Weise auf einer Presse montiert. Die Oberflächen der Werkzeuge weisen seitlich aneinandergereihte Pyramiden 8a, 8b auf, wobei diese Oberflächen durch Fräsen oder Hobeln einfach hergestellt werden können.

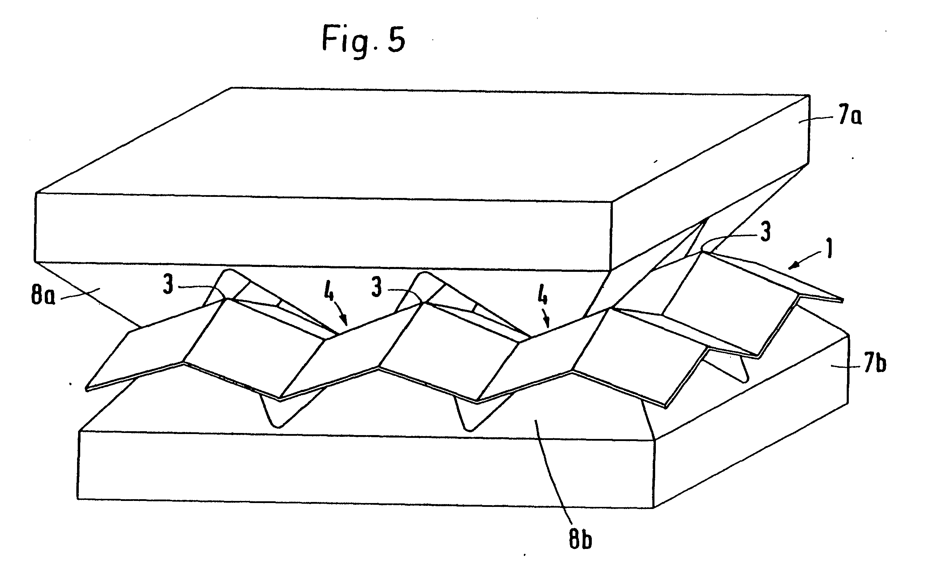

Fig. 5 zeigt den Ausschnitt der Werkzeuge gemäss Fig. 4, jedoch in geschlossener Stellung mit einem Teil einer gefertigten Folie 1.

Eine pyramidenförmige Vertiefung der Folie 1 wird dadurch erzeugt, dass im Viereck angeordnete Pyramiden 8b des Werkzeuges 7b die Grundfläche der pyramidenförmigen Vertiefung 4 aufspannen, während die Senke der Vertiefung 4 durch eine zentrisch angeordnete Pyramide 8a des Werkzeuges 7a bestimmt wird. Hierbei werden die Eckpunkte der Grundfläche der pyramidenförmigen Vertiefungen 4 zu Spitzen der angrenzenden pyramidenförmigen Erhebungen 3.

Sinngemäss gilt dieses auch für die andere Seite der Folie 1, wobei die entsprechenden Bezugsziffern mit einem Apostroph versehen werden wie in Fig. 3 und die Buchstaben der Bezugsziffern der Werkzeuge « a » und « b » vertauscht werden müssten.

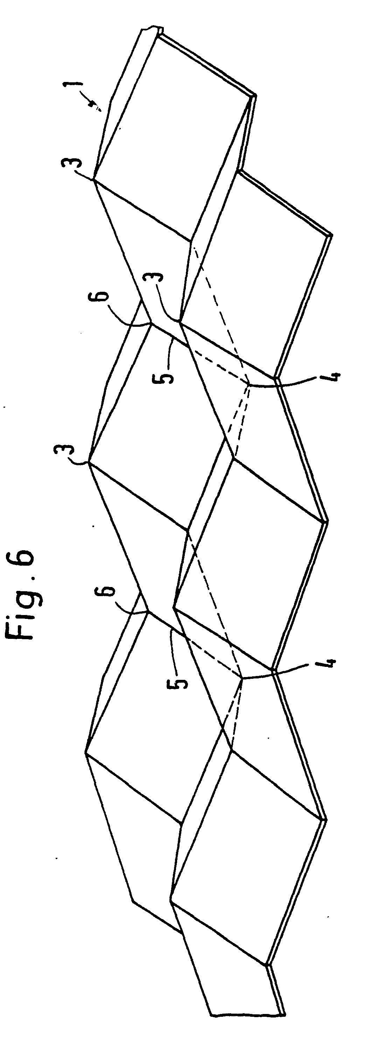

Fig. 6 zeigt einen Ausschnitt einer gefertigten Folie 1 in noch ungefaltetem Zustand (Bezugsziffern wie in Fig. 2).

Im Falle, dass die Folien anstelle eines Pressvorganges in einem Walzverfahren hergestellt werden sollen, gelten die vorstehenden Ausführungen hinsichtlich der plattenartigen Werkzeuge einer Presse für die Bearbeitung der beiden Walzenoberflächen.

Diese Herstellungsverfahren sind für plastisch verformbare Folien geeignet.

Durch die Strukturierung wird ausserdem eine Verfestigung des Materials erreicht, wodurch dünnere, kostengünstigere Folien Verwendung finden können.

Im Falle, dass Packungskörper hergestellt werden, die gemäss Fig. 1 ausgebildet sein sollen, werden die strukturierten Folien gefaltet und die zugeschnittenen Lagen zu einem Packungskörper zusammengefügt.

Es sei allgemein darauf hingewiesen, dass, wie in diesem Beispiel, die geometrischen Abmessungen — hier der Faltung — wesentlich grösser als diejenigen der erfindungsgemässen Feinstruktur sind.

Folien mit derartigen Strukturen können auch durch Spritzgiessen oder Pressen hergestellt werden, wenn z. B. Kunststoffe oder keramische Materialien verwendet werden.

Erfindungsgemässe Feinstrukturen können vorteilhaft überall dort angewendet werden, wo gleichmässige Flüssigkeitsrieselfilme erzeugt werden sollen.

Zahlenbeispiele

Im folgenden wird anhand von Versuchen die Verteilungswirkung der flüssigen Phase auf den Rieselflächen einer gemäss der DE-OS 32 22 892 ausgebildeten Folie mit einer erfindungsgemäss ausgebildeten Folie verglichen.

Hierbei wurden als Versuchskörper unten gezahnte Bleche verwendet mit einer Höhe und Breite von je 100 mm. Die Höhe der Wellenlänge betrug ca. 1 mm und die Abstände zwischen zwei Wellenbergen jeweils ca. 3 mm.

Als Versuchsflüssigkeit wurde Aceton verwendet, welches punktförmig an der Stelle S aufgegeben wurde, und zwar 12 ml/min.

Zur Vorbehandlung wurden die Bleche mit Aceton gereinigt, mit einem Heissluftföhn getrocknet und sodann total mit Aceton benetzt.

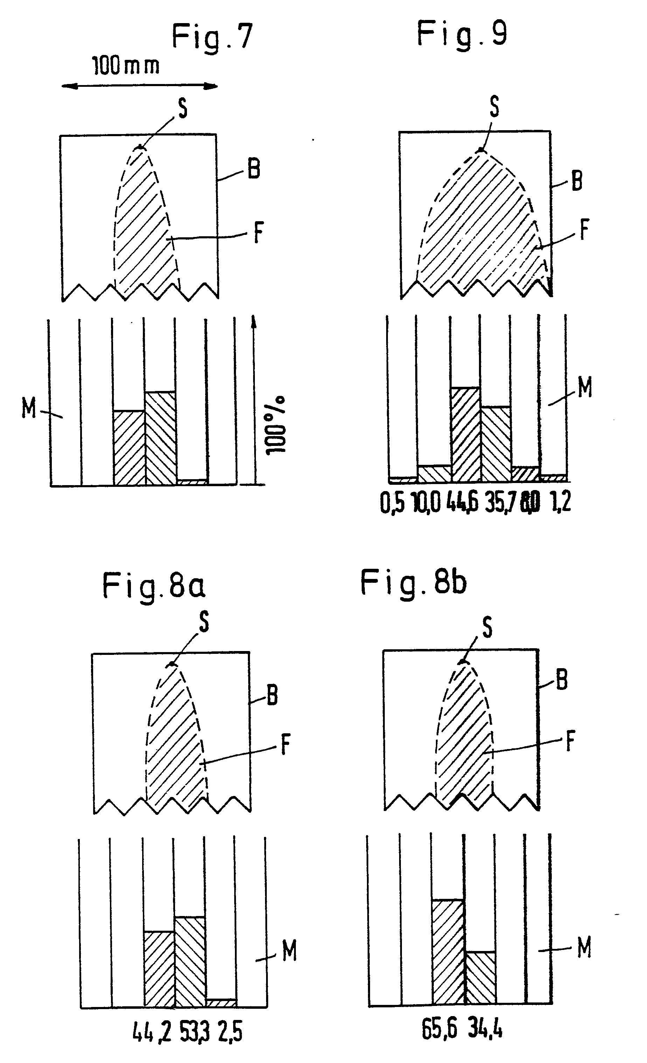

In Fig. 7 ist schematisch die Versuchsanordnung dargestellt.

Die auf ein Blech B am Punkt S aufgegebene Flüssigkeit verteilt sich über die schraffierte Fläche F und strömt in die darunter angeordneten Messzylinder M von je 20 mm Durchmesser.

Fig. 8a und 8b zeigen die Versuchsanordnung und die Versuchsergebnisse für ein gemäss der DE-OS 32 22 892 ausgebildetes Blech. Die Struktur eines derartigen Bleches ist auf der Vorder- und Rückseite verschieden, da den wellenartigen Erhebungen auf der Vorderseite Vertiefungen auf der Rückseite entsprechen.

Die Fig. 8a zeigt in der Messzylinderanordnung die Verteilwirkung auf der Vorderseite des Bleches (Erhebungen) und Fig. 8b auf der Rückseite des Bleches (Vertiefungen).

In Fig. 9 ist die gleiche Versuchsanordnung mit einem erfindungsgemäss ausgebildeten Blech dargestellt, welches auf beiden Seiten die gleiche Strukturierung zeigt.

Wie die berieselte Fläche F und das Messergebnis zeigen, wird bei einem erfindungsgemäss strukturierten Blech auf beiden Seiten eine wesentlich bessere Querverteilung als bei der bekannten Strukturierung erzielt.

## Patentansprüche

1. Packungskörper aus dünnem, folienartigem Material (1) für Kolonnen zum Stoff- und Wärmeaustausch zwischen flüssigen und gasförmigen Phasen, wobei die Materialoberflächen durch Prägen strukturiert sind und die Höhe der Erhebungen (3) bzw. Vertiefungen (4) der Struktur größer als die Materialdicke (t) ist, dadurch gekennzeichnet, daß die Struktur durchgehende, sich kreuzende Rinnen aufweist und symmetrisch zur Winkelhalbierenden (z) der sich kreuzenden Rinnen ausgebildet ist, wobei die Strukturen der Vorder- und Rückseite des folienartigen Materials (1) identisch und als Feinstrukturen derart ausgebildet sind, daß die Flüssigkeit unter der Wirkung von Gravitations- und Kapillarkräften gleichmäßig über die Materialoberflächen verteilt wird.

2. Packungskörper nach Anspruch 1, dadurch gekennzeichnet, daß die Winkelhalbierende (z) im eingebauten Zustand des Packungskörpers im wesentlichen parallel zur Fallinie der abwärts strömenden Flüssigkeit verläuft.

3. Packungskörper nach Anspruch 1 oder 2, dadurch gekennzeichnet, daß die Rinnen mit der Winkelhalbierenden (z) einen Winkel von 20 bis 70° einschließen.

4. Packungskörper nach einem der Ansprüche 1 bis 3, dadurch gekennzeichnet, daß die Erhebungen (3) bzw. Vertiefungen (4) pyramidenförmig sind.

5. Packungskörper nach einem der Ansprüche 1 bis 3, dadurch gekennzeichnet, daß die Erhebungen (3) bzw. Vertiefungen (4) kugelkalottenförmig sind.

6. Packungskörper nach einem der Ansprüche 1 bis 5, dadurch gekennzeichnet, daß die Breite der Rinnen zwischen 1 und 5 mm und die Tiefe der Rinnen zwischen 0,2 bis 2 mm liegt.

7. Verfahren zur Herstellung einer Struktur auf Folien für Packungskörper nach Anspruch 1 in einem Tiefziehvorgang mit zwei Werkzeugen, dadurch gekennzeichnet, daß die Oberflächen der Werkzeuge ein Profil von aneinandergereihten Erhebungen aufweisen, wobei die höchsten Punkte der Erhebungen des einen Werkzeugs zentrisch zwischen den höchsten Punkten der Erhebungen des anderen Werkzeugs liegen, wobei die Flächen der Strukturierung der Folien durch die Spitzen der Erhebungen der Werkzeuge gespannt werden.

8. Verfahren nach Anspruch 7, dadurch gekennzeichnet, daß die Werkzeuge als Platten ausgebildet sind, die auf einer Presse montiert sind, und daß beim Zusammenfahren der Platten die Oberflächen der Folie strukturiert werden, wobei die Folie schrittweise zwischen den beiden Platten bei deren Offenstellung hindurchgeschoben werden.

9. Verfahren nach Anspruch 7, dadurch gekennzeichnet, daß die Werkzeuge aus angetriebenen Walzen bestehen, und daß die Folie zwischen den Walzen hindurchgeführt wird.

## Claims

1. A regular packing element made of a thin foil-like material (1) for columns for mass transfer and heat exchange between liquid and gas phases, the surfaces of the material being structured by stamping, the height of the protuberances (3) and recesses (4) of the structure being greater than the thickness (t) of the material (1), characterised in that the structure is formed with continuous crossing channels and is symmetrical of the angle bisector (z) of the crossing channels, the structures of the front and back of the foil-like material (1) being identical and being so devised as fine structures that the liquid is distributed uniformly over the material surfaces by gravity and capillary forces.

2. A packing element according to claim 1, characterised in that in the assembled state of the packing element the angle bisector (z) extends substantially parallel to the fall line of the descending liquid.

3. A packing element according to claim 1 or 2, characterised in that the channels include an angle of from 20° to 70° with the angle bisector (z).

4. A packing element according to any of claims 1-3, characterised in that the protuberances (3) and recesses (4) are pyramidal.

5. A packing element according to any of claims 1-3, characterised in that the protuberances (3) and recesses (4) are part-spherical.

6. A packing element according to any of claims 1-5, characterised in that in the width of the channels is between 1 and 5 mm and the depth thereof is between 0.2 and 2 mm.

7. A method of producing a structure on foils for packing elements according to claim 1 in a deep-drawing operation with the use of two tools, characterised in that the tool surfaces have a pattern of contiguous protuberances, the peaks of the protuberances of one tool being disposed centrally between the peaks of the protuberances of the other tool, the surfaces of the structuring of the foils being clamped by the peaks of the protuberances of the tools.

8. A method according to claim 7, characterised in that the tools are in the form of plates disposed on a press, and when the plates are moved towards one another the foil surfaces experience structuring, the foil being moved stepwise between the two plates when the same are in their open position.

9. A method according to claim 7, characterised in that the tools are in the form of driven rolls and the foil is moved through therebetween.

**Revendications**

1. Corps de garniture en un matériau mince (1) du type feuille, pour colonnes d'échange de matières et d'échange thermique entre des phases liquides et gazeuses, les surfaces du matériau étant structurées par emboutissage et la hauteur respective des protubérances (3) ou renfoncements (4) de la structure étant supérieure à l'épaisseur (t) du matériau, caractérisé par le fait que la structure présente des rigoles ininterrompues se croisant, et est de réalisation symétrique par rapport à la bissectrice (z) des rigoles se croisant, les structures des faces antérieure et postérieure du matériau (1) de type feuille étant identiques et conçues en tant que structures fines, de telle sorte que le liquide soit réparti uniformément sur les surfaces du matériau, sous l'action de forces gravitationnelles et capillaires.

2. Corps de garniture selon la revendication 1, caractérisé par le fait que, à l'état incorporé de ce corps de garniture, la bissectrice (z) s'étend, pour l'essentiel, parallèlement à la ligne de chute du liquide s'écoulant vers le bas.

3. Corps de garniture selon la revendication 1 ou 2, caractérisé par le fait que les rigoles forment un angle de 20 à 70° avec la bissectrice (z).

4. Corps de garniture selon l'une des revendications 1 à 3, caractérisé par le fait que les protubérances (3) ou renfoncements (4) sont respectivement de forme pyramidale.

5. Corps de garniture selon l'une des revendications 1 à 3, caractérisé par le fait que les protubérances (3) ou renfoncements (4) sont respectivement en forme de calottes sphériques.

6. Corps de garniture selon l'une des revendications 1 à 5, caractérisé par le fait que la largeur des rigoles se situe entre 1 et 5 mm, la profondeur de ces rigoles étant comprise entre 0,2 et 2 mm.

7. Procédé de production d'une structure sur des feuilles pour corps de garniture selon la revendication 1, par un processus d'emboutissage profond à l'aide de deux outils, caractérisé par le fait que les surfaces des outils comportent un profil à protubérances mutuellement alignées, les points les plus hauts des protubérances de l'un des outils occupant une position centrale entre les points les plus hauts des protubérances de l'autre outil, les surfaces de la structure dont les feuilles sont pourvues étant soumises à une tension par les crêtes des protubérances des outils.

8. Procédé selon la revendication 7, caractérisé par le fait que les outils sont réalisés sous la forme de plaques qui sont montées sur une presse ; et par le fait que les surfaces de la feuille sont structurées lors du déplacement conjoint desdites plaques, la feuille étant poussée progressivement de part en part entre les deux plaques dans la position ouverte de ces dernières.

9. Procédé selon la revendication 7, caractérisé par le fait que les outils sont constitués par des cylindres entraînés ; et par le fait que la feuille est engagée d'un trait entre les cylindres.

# Fig.1

1

S

2

# Fig.2

# Fig.3

# Fig. 4

7a

8a

8b

7b

EP 0 190 435 B1

Fig. 5

EP 0 190 435 B1

Fig.6

## Fig. 7

## Fig. 9

0,5 10,0 44,6 35,7 8,0 1,2

## Fig. 8a

44,2 53,3 2,5

## Fig. 8b

65,6 34,4

6